# EUROPÄISCHE PATENTANMELDUNG

(11) **EP 0 732 244 A2**
(43) Veröffentlichungstag der Anmeldung: **18.09.1996**
(21) Anmeldenummer: 96103625.8
(22) Anmeldetag: 08.03.1996
(51) Int. Cl.: B60T 17/02, G05D 16/02

(54) **Druckregler für Druckluft-Bremsanlagen von Nutzfahrzeugen**

(30) Priorität: 16.03.1995 DE 19509546
(71) Anmelder: ROBERT BOSCH GMBH, 70442 Stuttgart (DE)
(72) Erfinder: Delfs, Joachim, Ing. (grad.), D-71282 Hemmingen (DE)

(57) **Zusammenfassung**

Der Druckregler soll zum Einstellen der Kraftwirklinie seiner Regelfeder vereinfacht werden.

Der Druckregler (1) hat eine zwischen zwei Federtellern (15 und 24) abgestützte Regelfeder (17). Während ein Federteller (15) zentrisch angeordnet ist, sitzt der andere Federteller (24) auf einem Stift (21), der exzentrisch in einem die Regelfeder (17) umhüllenden Gehäuseteil (10) gelagert ist. Durch Verdrehen des Gehäuseteils (10) um seine Längsachse (16) ist die Kraftwirklinie der Regelfeder (17) einstellbar.

Der Druckregler (1) ist für Druckluft-Bremsanlagen von Nutzfahrzeugen bestimmt.

## Beschreibung

### Stand der Technik

Die Erfindung geht aus von einem Druckregler nach der Gattung des Patentanspruchs.

Es ist schon ein solcher Druckregler bekannt (EP 0 072 398 B1), bei dem die Vorspannung der Regelfeder und deren Kraftwirklinie einstellbar ist. Für die Einstellung der Vorspannung ist eine axial verstellbare Schraube vorgesehen, an welcher der membranabgewandte Federteller abgestützt ist. Für die Einstellung der Kraftwirklinie der Regelfeder ist dagegen im die Feder umhüllenden Gehäuseteil in dessen Stirnwand ein verdrehbares Einstellelement gelagert, welches auch die außermittig angeordnete Schraube aufnimmt. Das Gehäuseteil ist mit dem Reglergehäuse unverdrehbar verbunden, beispielsweise durch Schrauben, wie dies aus DE 32 10 029 A1 bekannt ist. Das zusätzliche Einstellelement verteuert jedoch die Herstellung des Druckreglers.

### Vorteile der Erfindung

Der erfindungsgemäße Druckregler mit den kennzeichnenden Merkmalen des Patentanspruchs hat demgegenüber den Vorteil, daß ein besonderes Einstellelement nicht benötigt wird, sondern das Einstellen der Kraftwirklinie der Regelfeder auf einfache Weise im wesentlichen durch Verdrehen des Gehäuseteils zu erzielen ist. Diese Maßnahme bedarf keines manuellen Eingriffs in das Innere des Druckreglers. Außerdem ist der Druckregler durch den Wegfall des besonderen Einstellelements kostengünstiger herstellbar.

Durch die in den Unteransprüchen aufgeführten Maßnahmen sind vorteilhafte Weiterbildungen und Verbesserungen des im Patentanspruch angegebenen Druckreglers möglich.

### Zeichnung

Ein Ausführungsbeispiel der Erfindung ist nachstehend an einem geschnitten gezeichneten Abschnitt eines Druckreglers dargestellt und in der nachfolgenden Beschreibung näher erläutert.

### Beschreibung des Ausführungsbeispiels

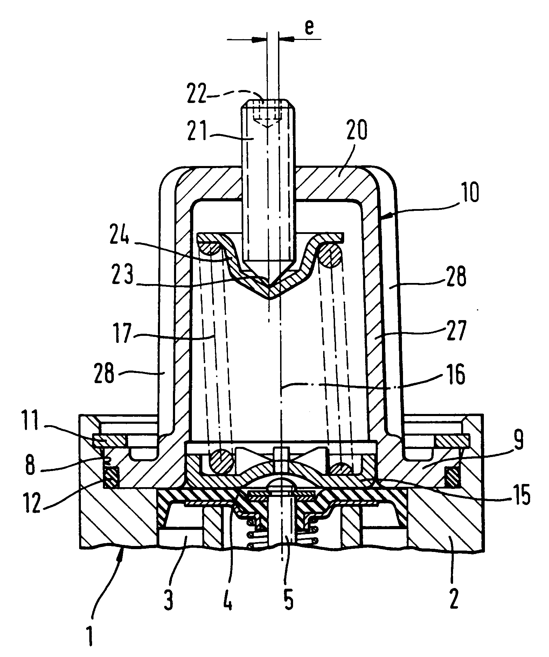

Ein in der Zeichnung nur zu einem Teil wiedergegebener Druckregler 1 für Druckluft-Bremsanlagen von Nutzfahrzeugen weist ein Reglergehäuse 2 mit einer Druckmittelkammer 3 auf, welche durch eine als Kolben dienende Membran 4 begrenzt ist. Mit dieser ist ein Stößel 5 zur Betätigung nicht dargestellter Steuerglieder des Druckreglers 1 verbunden. Der Druckregler 1 hat im Reglergehäuse 2 eine im Grundriß kreisförmige Ausnehmung 8 zur passenden Aufnahme eines Flansches 9, welcher an einem kappenförmigen Gehäuseteil 10 des Druckreglers 1 angeformt ist. Der Flansch 9 ist zur offenen Seite der Ausnehmung 8 hin durch einen in das Reglergehäuse 2 eingesetzen Sprengring 11 übergriffen. Das Gehäuseteil 10 ist hierdurch in axialer Richtung am Reglergehäuse 2 festgelegt. In der Ausnehmung 8 befindet sich außerdem ein sowohl am Flansch 9 als auch am Reglergehäuse 2 angreifender Dichtungsring 12.

Auf der Membran 4 ist kammerabgewandt ein im Gehäuseteil 10 geführter erster Federteller 15 abgestützt. Dieser liegt ebenso wie der Stößel 5 in der Längsachse 16 des Gehäuseteils 10. Auf dem ersten Federteller 15 ist eine nachfolgend als Regelfeder 17 bezeichnete schraubenförmige Druckfeder mit ihrer einen Endwindung abgestützt und zentriert.

Die Regelfeder 17 erstreckt sich innerhalb des Gehäuseteils 10 vom Federteller 15 gegen eine radial verlaufende Stirnwand 20, welche von einer im Abstand e zur Längsachse 16 parallel verlaufenden Stiftschraube 21 durchdrungen ist. An ihrem außerhalb des Gehäuseteils 10 befindlichen Endabschnitt ist die Stiftschraube 21 mit einem Innensechskant 22 zum Angriff eines nicht dargestellten Verdrehwerkzeugs versehen. An ihrem anderen, innenliegenden Endabschnitt weist die Stiftschraube 21 eine zentrisch ausgebildete Spitze 23 auf. Die Spitze 23 greift am Zentrum eines trichterförmig ausgebildeten zweiten Federtellers 24 an, an dem die zweite Endwindung der Regelfeder 17 abgestützt und zentriert ist. Aufgrund der gegenüber dem ersten Federteller 15 exzentrischen Lagerung des zweiten Federtellers 24 hat hierdurch die Kraftwirklinie der Regelfeder 17 einen bezüglich der Längsachse 16 geneigten Verlauf.

Mit der Stiftschraube 21 ist die Vorspannung der Regelfeder 17 veränderbar: Durch Hineinschrauben in das Gehäuseteil 10 wird die Vorspannung erhöht, durch axiales Verstellen der Stiftschraube 21 in die andere Richtung wird die Vorspannung vermindert.

Das Einstellen der Kraftwirklinie der Regelfeder 17 erfolgt auf einfache Weise durch Verdrehen des Gehäuseteils 10 um die Achse 16. Hierzu sind außen am Gehäuseteil 10 an dessen zwischen dem Flansch 9 und der Stirnwand 20 verlaufenden Mantelwand 27 mehrere Längsrippen 28 in gleichmäßiger Teilung für den Angriff eines nicht gezeichneten Verdrehwerkzeugs angeformt. Beim Drehen des Gehäuseteils 10 wird die Regelfeder 17, ausgehend vom als Zentrum dienenden ersten Federteller 15, um die Längsachse 16 verschwenkt, bis die für das gewünschte Regelverhalten des Druckreglers 1 günstigste Kraftwirklinie gefunden ist. Die Vorspannung der Regelfeder 17 wird dabei nicht verändert. Der von der Vorspannung der Regelfeder 17 hervorgerufene Reibschluß zwischen dem Flansch 9 und dem Sprengring 11 sowie die durch den Dichtungsring 12 verursachte Reibung sichert das Gehäuseteil 10 in der eingestellten Lage gegen unbeabsichtigtes Verändern der Kraftwirklinie.

Ohne die erfinderische Lehre zu verlassen, ist es auch möglich, anstelle der Stiftschraube 21 eine Schraube mit einem Kopf zu verwenden und auch gegebenenfalls ein Sicherungselement vorzusehen, um die Stiftschraube gegenüber dem Gehäuseteil 10 zu verspannen. Auch können Maßnahmen getroffen werden, um den Flansch 9 auf andere Weise als dargestellt und beschrieben in der Ausnehmung 8 axial zu halten und nach dem Einstellvorgang der Kraftwirklinie der Regelfeder 17 gegebenenfalls gegen Verdrehen des Gehäuseteils 10 zu sichern.

## Patentansprüche

1. Druckregler (1) für Druckluft-Bremsanlagen von Nutzfahrzeugen,
mit einem eine Druckmittelkammer (3) enthaltenden Reglergehäuse (2),
einer die Kammer (3) begrenzenden Membran (4),
einem an der Membran (4) kammerabgewandt abgestützten, ersten Federteller (15),
einem mit Abstand zum ersten Federteller (15) angeordneten, zweiten Federteller (24),
eine zwischen den beiden Federtellern (15, 24) abgestützte, schraubenförmige Regelfeder (17),
einem die Regelfeder (17) umhüllenden, mit dem Reglergehäuse (2) zentrisch zum ersten Federteller (15) verbundenen Gehäuseteil (10)
und mit einem exzentrisch angeordneten, axial verstellbaren Stift (21), an dem der zweite Federteller (24) gelagert ist,
dadurch gekennzeichnet,
daß der Stift (21) unmittelbar im Gehäuseteil (10) gelagert und dieses während des Einstellvorgangs der Kraftwirklinie der Regelfeder (17) relativ zum Reglergehäuse (2) verdrehbar ist.

2. Druckregler nach Anspruch 1, dadurch gekennzeichnet, daß das Gehäuseteil (10) mit einem Flansch (9) in eine passende Ausnehmung (8) des Reglergehäuses (2) eingreift, an dem den Flansch (9) axial haltende Befestigungsmittel (11) vorgesehen sind.

3. Druckregler nach Anspruch 2, dadurch gekennzeichnet, daß der Flansch (9) von einem in das Reglergehäuse (2) eingelegten Sprengring (11) übergriffen ist.

4. Druckregler nach Anspruch 2, dadurch gekennzeichnet, daß ein axial und/oder radial wirkender Dichtungsring (12) zwischen dem Gehäuseteil (10) und dem Reglergehäuse (2) angeordnet ist.

5. Druckregler nach Anspruch 1, dadurch gekennzeichnet, daß außen am Gehäuseteil (10) Längsrippen (28) für den Angriff eines Verdrehwerkzeugs angeformt sind.
